# EUROPEAN PATENT SPECIFICATION

(11) **EP 3 684 902 B1**
(45) Date of publication and mention of the grant of the patent: **07.07.2021**
(21) Application number: 18789250.0
(22) Date of filing: 19.09.2018
(51) Int. Cl.: C11D 17/04, B65D 81/32, B65D 65/46

(54) **POUCHED UNIT AND METHOD OF USING SAID POUCHED UNIT**
BEUTELEINHEIT UND VERFAHREN ZUR VERWENDUNG DIESER BEUTELEINHEIT
UNITÉ ENSACHÉE ET PROCÉDÉ D'UTILISATION DE LADITE UNITÉ ENSACHÉE

(30) Priority: 19.09.2017 NL 2019573
(43) Date of publication of application: 29.07.2020
(73) Proprietor: Eme Engel Machinefabriek En Engineering B.V., 1508 EV Zaandam (NL)
(72) Inventor: BOOD, Arie, 1508 EV Zaandam (NL)
(74) Representative: EP&C
(86) International application number: PCT/NL2018/050617
(87) International publication number: WO 2019/059762

(56) References cited:
- EP-A1- 3 025 848
- WO-A1-02/40370
- WO-A1-89/04282
- WO-A1-02/053696
- WO-A1-2015/150231
- WO-A1-2016/054459
- DE-A1- 10 000 354
- US-A1- 2003 092 590

## Description

### FIELD OF THE INVENTION

The invention relates to a pouched unit comprising a dose of a substance which is enveloped by a main part of a pouch made from a water soluble material. In practice, such a pouched unit is often used for detergents, like a laundry detergent.

### BACKGROUND OF THE INVENTION

EP 3025848 A1, WO 02/40370 A1, WO 2015/150231 A1, WO 2016/054459 A1 and WO 02/053696 A1 disclose pouched units comprising a unit dose of an active substance which is enveloped by a main part of a pouch made from a water soluble material. A detachable secondary part of the pouch is connected via a line of weakness to the main part.

The invention is based on the insight that there is a need to inform the user.

### SUMMARY OF THE INVENTION

The invention has the objective to provide an improved (or at least alternative) pouched unit. This objective is reached by a pouched unit comprising a dose of a substance which is enveloped by a main part of a pouch made from a water soluble material, wherein the pouch comprises a secondary part made from the water soluble material, the secondary part is attached to the main part via a weaker area of the water soluble material, which weaker area is configured to allow manual separation of the secondary part from the main part, and a message is provided on the secondary part.

The secondary part allows that a message can be added to pouched unit. The message may comprise user instructions for the user of the pouched unit. The weaker area allows that the additional water soluble material of the secondary part of the pouch can manually be removed before the main part of the pouch and its dose of substance is used. This way, a message can be provided to the user while preventing that the additional water soluble material of the secondary part negatively affects the use of the main part and its dose of substance.

In an embodiment of the pouched unit, the message comprises a text or a symbol.

In an embodiment of the pouched unit, the message is provided on the secondary part by a colourant.

In an embodiment of the pouched unit, the message is provided on the secondary part by a relief.

In an embodiment of the pouched unit, the pouch has a lower tensile strength at the weaker area when compared with the main part and the secondary part.

In an embodiment of the pouched unit, the secondary part extends away from the main part.

In an embodiment of the pouched unit, the substance in the main part of the pouch is a detergent material, such as a laundry detergent.

In an embodiment of the pouched unit, the water soluble material has been subjected to a weakening treatment at the weaker area.

In an embodiment of the pouched unit, the weaker area comprises one incision or multiple incisions in the water soluble material.

In an embodiment of the pouched unit, the pouch is only formed by the water soluble material.

In an embodiment of the pouched unit, the pouch is formed by at least two interconnected films of the water soluble material.

In an embodiment of the pouched unit, the main part comprises a main peripheral rim, the secondary part comprises a secondary peripheral rim, the at least two films are connected to each other at the main peripheral rim, the weaker area and the secondary peripheral rim, and the weaker area is located between the main peripheral rim and the secondary peripheral rim.

In an embodiment of the pouched unit, the main peripheral rim surrounds the substance and the secondary peripheral rim surrounds the message.

In an embodiment of the pouched unit, at least one recess is provided in the two interconnected films adjacent to the weaker area, and the recess extends between the main peripheral rim and the secondary peripheral rim.

In an embodiment of the pouched unit, a first recess and a second recess is provided in the two interconnected films adjacent to the weaker area, the first recess and the second recess extend between the main peripheral rim and the secondary peripheral rim, and the weaker area is located between the first recess and the second recess.

In an embodiment of the pouched unit, the weaker area is located between a main side part of the main peripheral rim and a secondary side part of the secondary peripheral rim, the main side part and the secondary side part extend in a side part direction, and the weaker area extends over a smaller distance in the side part direction than each of the main side part and the secondary side part.

The invention further relates to a method of using a pouched unit according to the invention. Said method comprises holding the main part of the pouch in one hand and holding the secondary part of the pouch in another hand, and manually separating the secondary part from the main part at the weaker area.

In an embodiment of the method, the substance in the main part is a laundry detergent and the method comprises;
- placing laundry in a washing machine,
- analysing the message of the secondary part,
- placing the main part of the in the washing machine after the secondary part has been manually separated from the main part, and
- disposing the secondary part.

### BRIEF DESCRIPTION

Embodiments of the pouched unit and the method according to the invention will be described by way of example only, with reference to the accompanying schematic drawings in which corresponding reference symbols indicate corresponding parts, and in which:
Figure 1A schematically shows a front view of a first embodiment of the pouched unit according to the invention,
Figure 1B schematically shows a front view of the pouched unit of fig. 1A, wherein the main part and the secondary part have been manually separated,
Figure 1C schematically shows a view in perspective of the pouched unit of fig. 1A,
Figure 2 schematically shows a view in cross section along line II-II of the pouched unit of fig. 1A,
Figure 3A schematically shows a front view in a second embodiment of the pouched unit according to the invention,
Figure 3B schematically shows a front view of the pouched unit of fig. 3A, wherein the main part and the secondary part have been manually separated,
Figure 3C schematically shows a view in perspective of the pouched unit of fig. 3A,
Figure 4A schematically shows a front view in a third embodiment of the pouched unit according to the invention,
Figure 4B schematically shows a front view of the pouched unit of fig. 4A, wherein the main part and the secondary part have been manually separated, and
Figure 4C schematically shows a view in perspective of the pouched unit of fig. 4A.

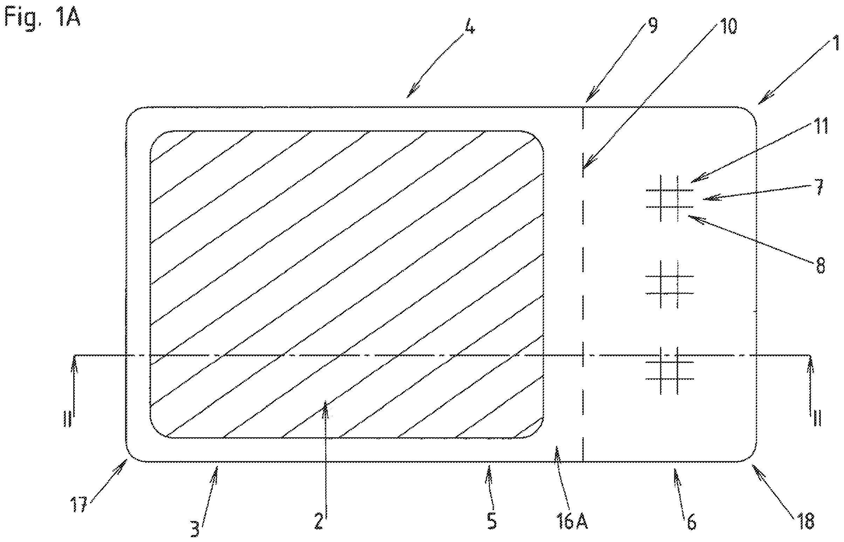

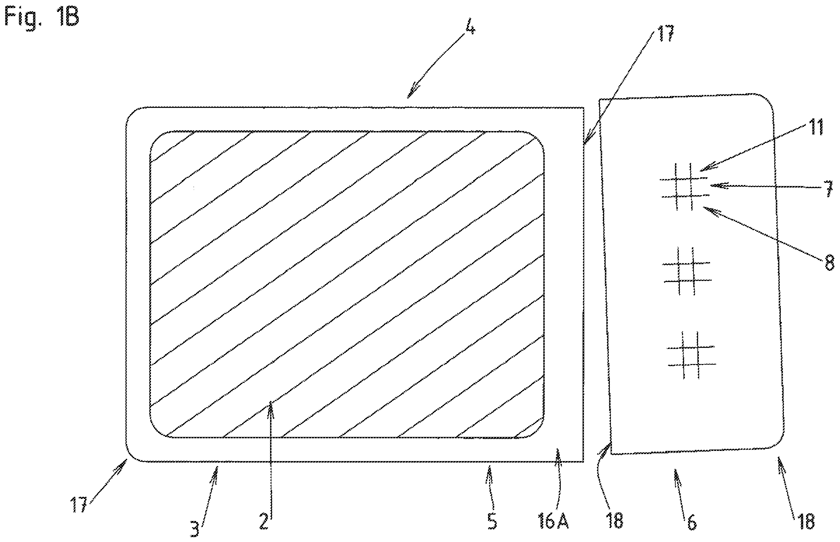

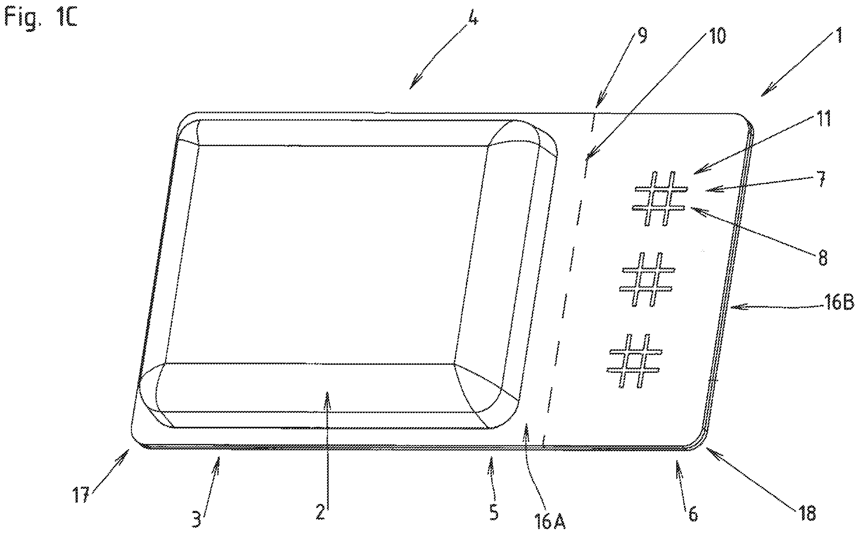

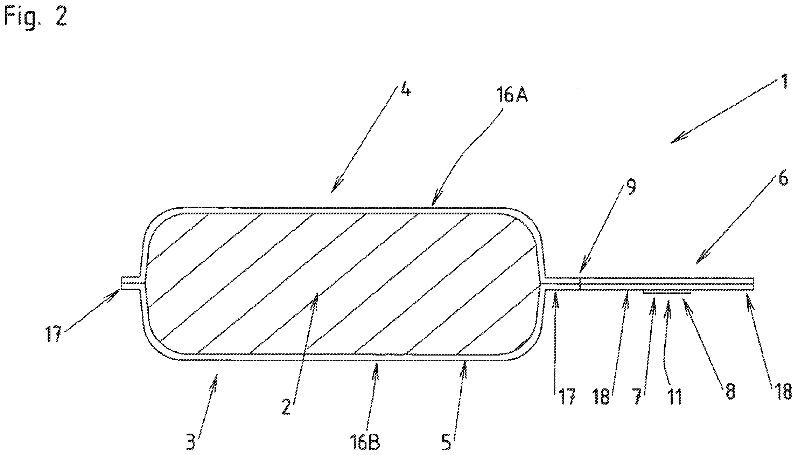

The figures 1A-C and 2 show a first embodiment of the pouched unit 1 according to the invention. The pouched unit 1 comprises a dose of a substance 2 which is enveloped by a main part 3 of a pouch 4 made from a water soluble material 5. The pouch 4 comprises a secondary part 6 made from the water soluble material 5. The secondary part 6 is attached to the main part 3 via a weaker area 9 of the water soluble material 5. The weaker area 9 is configured to allow manual separation of the secondary part 6 from the main part 3.

The secondary part 6 comprises a message 7 with user information for the user. The weaker area 9 allows that the additional water soluble material 5 of the secondary part 6 of the pouch 4 can manually be removed before the main part 3 of the pouch 4 and its dose of substance 2is used. This way, the message 7 can be provided to the user while preventing that the additional water soluble material of the secondary part 6 negatively affects the use of the main part 3 and its dose of substance 2.

The pouch 4 has a lower tensile strength at the weaker area 9 when compared with the main part 3 and the secondary part 6. This facilitates the manually separation of the secondary part 6 from the main part 3.

The secondary part 6 extends away from the main part 3. This facilitates the addition of the message 7 to the secondary part 6.

The substance 2 in the main part 3 of the pouch 4 is a detergent material, more specifically a laundry detergent. The message 7 comprises user instructions for the user of the pouched unit 1. The message 7 may comprise different information, such a warning for toxic materials. The message 7 may comprise a text or a symbol 8. The message 7 is provided on the secondary part 6 by a colourant 11. The water soluble material 5 is transparent.

The water soluble material 5 is a polyvinyl alcohol (PVOH). Other types of water soluble materials may be used.

The water soluble material 5 has been subjected to a weakening treatment at the weaker area 9. The weaker area 9 comprises multiple incisions 10 in the water soluble material 5. In another example, the weaker area 9 comprises one incision 10 in the water soluble material 5.

The pouch 4 is only formed by the water soluble material 5. This means that the pouch 4 itself only contains the water soluble material 5. It is possible that another material is provided on the pouch, such as a colorant.

The pouch 4 is formed by two interconnected films 16A, 16B of the water soluble material 5. The two films 16A, 16B are transparent. In other examples, the water soluble material 5 is translucent, or opaque. The water soluble material 5 may coloured.

The main part 3 comprises a main peripheral rim 17. The secondary part 6 comprises a secondary peripheral rim 18. The at least two films 16A, 16B are connected to each other at the main peripheral rim 17, the weaker area 9 and the secondary peripheral rim 18. The weaker area 9 is located between the main peripheral rim 17 and the secondary peripheral rim 18. The main peripheral rim 17 surrounds the substance 2 and the secondary peripheral rim 18 surrounds the message 7.

The method of using the pouched unit 1 comprises holding the main part 3 of the pouch 4 in one hand and holding the secondary part 6 of the pouch 4 in another hand, and manually separating the secondary part 6 from the main part 3 at the weaker area 9. More specifically, the method comprises placing laundry in a washing machine, analysing the message 7 of the secondary part 6, placing the main part 3 of the in the washing machine after the secondary part 6 has been manually separated from the main part 3, and disposing the secondary part 6.

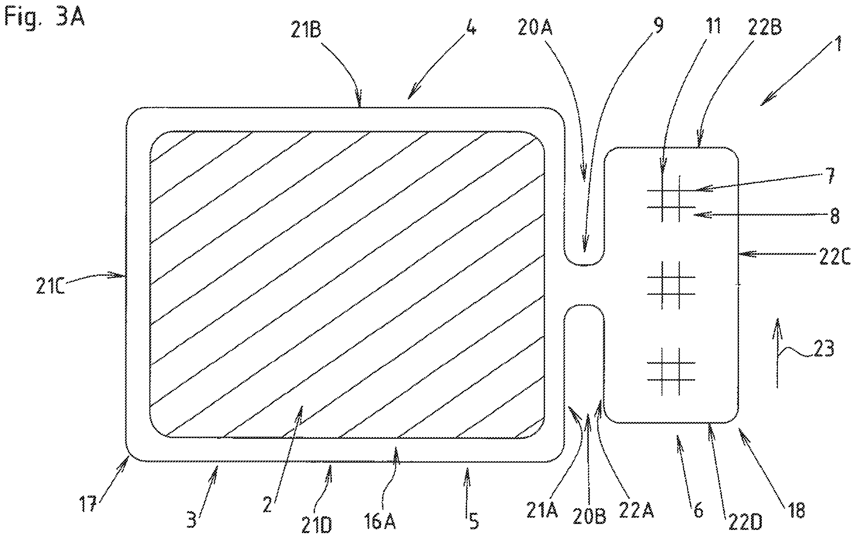

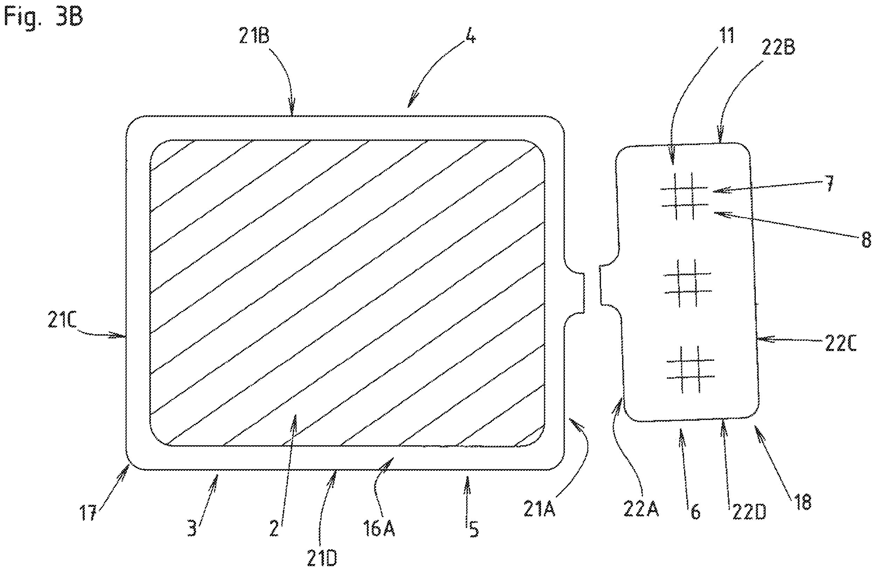

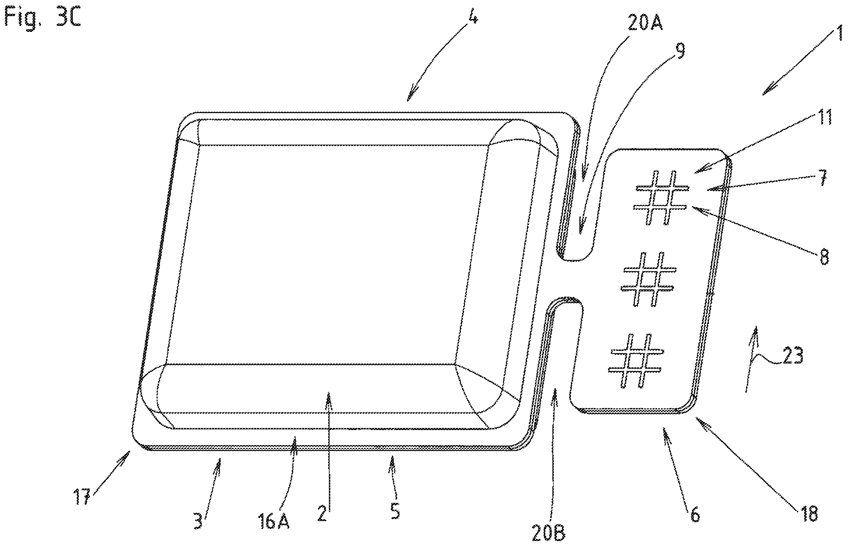

The figures 3A-C show a second embodiment of the pouched unit 1 according to the invention. A first recess 20A and a second recess 20B is provided in the two interconnected films 16A, 16B adjacent to the weaker area 9. The first recess 20A and the second recess 20B extend between the main peripheral rim 17 and the secondary peripheral rim 18. The weaker area 9 is located between the first recess 20A and the second recess 20B.

In another example, only one recess is provided in the two interconnected films 16A, 16B adjacent to the weaker area 9, and the recess extends between the main peripheral rim 17 and the secondary peripheral rim 18.

The main peripheral rim 17 comprises a first main side part 21A, a second main side part 21B, a third main side part 21C, and a fourth main side part 21D. The secondary peripheral rim 18 comprises a first secondary side part 22A, a second secondary side part 22B, a third secondary side part 22C, and a fourth secondary side part 22D. The weaker area 9 is located between the first main side part 21A of the main peripheral rim 17 and the first secondary side part 22A of the secondary peripheral rim 18. The first main side part 21A and the first secondary side part 22A extend in a side part direction 23. The weaker area 9 extends over a smaller distance in the side part direction 23 than each of the first main side part 21A and the first secondary side part 22A.

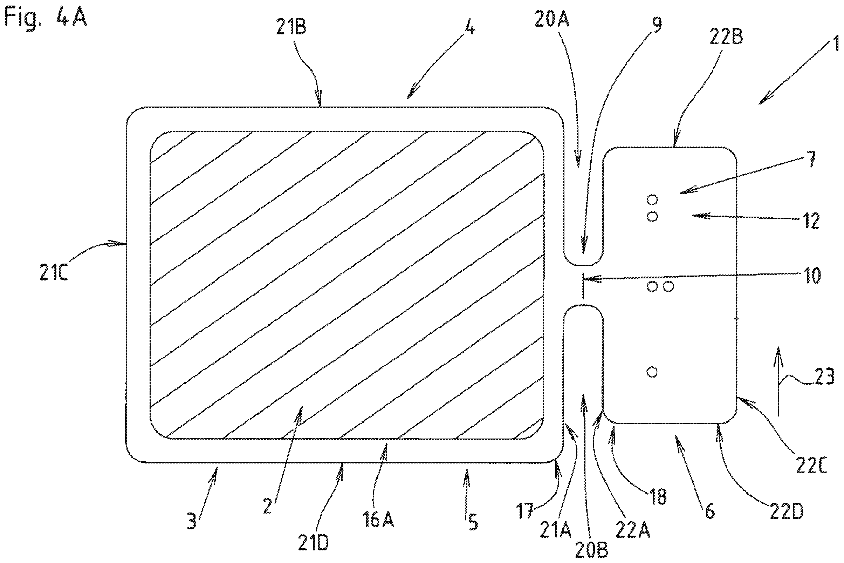

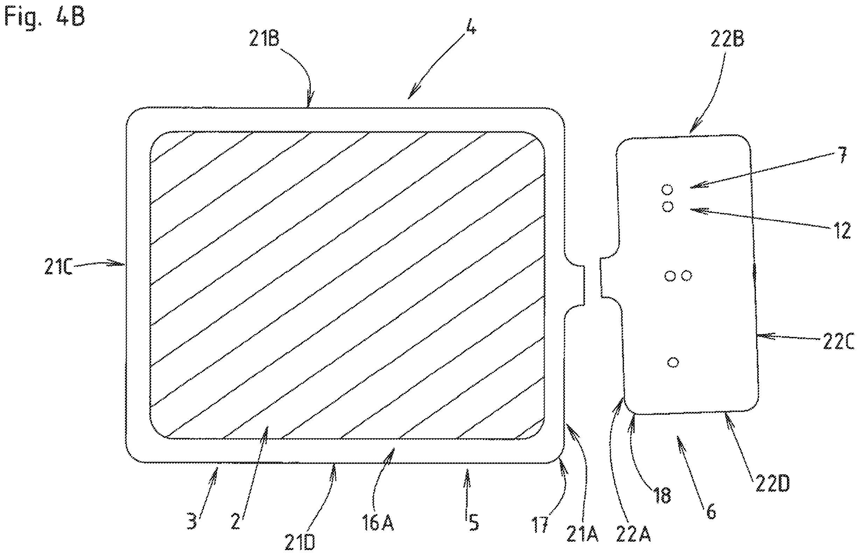

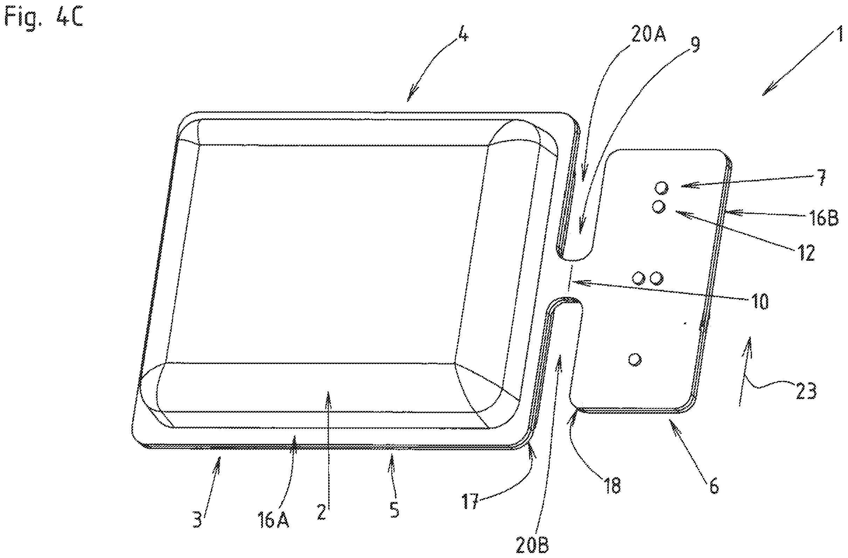

The figures 4A-C shows a third embodiment of the pouched unit 1 according to the invention. Also in this embodiment, the substance 2 comprises a detergent.

The message 7 is provided on the secondary part 6 by a relief 12. More specifically, the relief 12 is braille to inform people who are blind or visually impaired. In other examples, the relief 12 has the form of text or as symbol 8.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

It will be apparent to those skilled in the art that various modifications can be made to the pouched unit and the method without departing from the scope as defined in the claims.

## Claims

1. Pouched unit (1) comprising a dose of a substance (2) which is enveloped by a main part (3) of a pouch (4) made from a water soluble material (5), wherein;
- the pouch comprises a secondary part (6) made from the water soluble material,
- the secondary part is attached to the main part via a weaker area (9) of the water soluble material, which weaker area is configured to allow manual separation of the secondary part from the main part, and
- a message (7) is provided on the secondary part.

2. Pouched unit according to claim 1, wherein the message comprises a text or a symbol.

3. Pouched unit according to claim 1 or 2, wherein the message is provided by a colourant (11).

4. Pouched unit according to any one of the preceding claims, wherein the message is provided by a relief (12).

5. Pouched unit according to any one of the preceding claims, wherein the pouch has a lower tensile strength at the weaker area when compared with the main part and the secondary part.

6. Pouched unit according to any one of the preceding claims, wherein the secondary part extends away from the main part.

7. Pouched unit according to any one of the preceding claims, wherein the substance in the main part of the pouch is a detergent material, such as a laundry detergent.

8. Pouched unit according to any one of the preceding claims, wherein the water soluble material has been subjected to a weakening treatment at the weaker area, and wherein optionally the weaker area comprises one incision (10) or multiple incisions (10) in the water soluble material.

9. Pouched unit according to any one of the preceding claims, wherein the pouch is only formed by the water soluble material.

10. Pouched unit according to any one of the preceding claims, wherein the pouch is formed by at least two interconnected films (16A, 16B) of the water soluble material.

11. Pouched unit according to claim 10, wherein;
- the main part comprises a main peripheral rim (17),
- the secondary part comprises a secondary peripheral rim (18),
- the at least two films are connected to each other at the main peripheral rim, the weaker area and the secondary peripheral rim, and
- the weaker area is located between the main peripheral rim and the secondary peripheral rim.

12. Pouched unit according to claim 11, wherein:
- the main peripheral rim surrounds the substance and the secondary peripheral rim surrounds the message, and/or wherein:
- at least one recess is provided in the two interconnected films adjacent to the weaker area, and the recess extends between the main peripheral rim and the secondary peripheral rim, and/or wherein:
- a first recess (20A) and a second recess (20B) is provided in the two interconnected films adjacent to the weaker area, the first recess and the second recess extend between the main peripheral rim and the secondary peripheral rim, and the weaker area is located between the first recess and the second recess.

13. Pouched unit according to claim 12, wherein;
- the weaker area is located between a main side part (21A) of the main peripheral rim and a secondary side part (22A) of the secondary peripheral rim,
- the main side part and the secondary side part extend in a side part direction (23), and
- the weaker area extends over a smaller distance in the side part direction than each of the main side part and the secondary side part.

14. Method of using a pouched unit according to any one of the preceding claims, comprising;
- holding the main part of the pouch in one hand and holding the secondary part of the pouch in another hand, and
- manually separating the secondary part from the main part at the weaker area.

15. Method according to claim 14, wherein the substance in the main part is a laundry detergent and the method comprises;
- placing laundry in a washing machine,
- analysing the message of the secondary part,
- placing the main part of the in the washing machine after the secondary part has been manually separated from the main part, and
- disposing the secondary part.

## Patentansprüche

1. Beuteleinheit (1), umfassend eine Dosis einer Substanz (2), die von einem Hauptteil (3) eines Beutels (4), der aus einem wasserlöslichen Material (5) hergestellt ist, umhüllt ist, wobei:
- der Beutel einen Sekundärteil (6) umfasst, der aus dem wasserlöslichen Material hergestellt ist,
- der Sekundärteil an dem Hauptteil über einen schwächeren Bereich (9) des wasserlöslichen Materials angebracht ist, wobei der schwächere Bereich eingerichtet ist, eine manuelle Trennung des Sekundärteils von dem Hauptteil zu ermöglichen, und
- eine Nachricht (7) auf dem Sekundärteil vorgesehen ist.

2. Beuteleinheit nach Anspruch 1, wobei die Nachricht einen Text oder ein Symbol umfasst.

3. Beuteleinheit nach Anspruch 1 oder 2, wobei die Nachricht durch einen Farbstoff (11) bereitgestellt ist.

4. Beuteleinheit nach einem der vorangegangenen Ansprüche, wobei die Nachricht durch ein Relief (12) bereitgestellt ist.

5. Beuteleinheit nach einem der vorangegangenen Ansprüche, wobei der Beutel eine geringere Zugfestigkeit an dem schwächeren Bereich aufweist im Vergleich zu dem Hauptteil und dem Sekundärteil.

6. Beuteleinheit nach einem der vorangegangenen Ansprüche, wobei sich der Sekundärteil von dem Hauptteil weg erstreckt.

7. Beuteleinheit nach einem der vorangegangenen Ansprüche, wobei die Substanz in Hauptteil des Beutels ein Reinigungsmaterial, wie beispielsweise ein Waschmittel, ist.

8. Beuteleinheit nach einem der vorangegangenen Ansprüche, wobei das wasserlösliche Material an dem schwächeren Bereich einer Schwächungsbehandlung unterzogen wurde, und wobei wahlweise der schwächere Bereich einen Einschnitt (10) oder mehrere Einschnitte (10) in dem wasserlöslichen Material aufweist.

9. Beuteleinheit nach einem der vorangegangenen Ansprüche, wobei der Beutel nur durch das wasserlösliche Material gebildet wird.

10. Beuteleinheit nach einem der vorangegangenen Ansprüche, wobei der Beutel durch zumindest zwei miteinander verbundene Filme (16A, 16B) aus dem wasserlöslichen Material gebildet wird.

11. Beuteleinheit nach Anspruch 10, wobei:
- der Hauptteil einen Hauptumfangsrand (17) aufweist,
- der Sekundärteil einen Sekundärumfangsrand (18) aufweist,
- die mindestens zwei Filme an dem Hauptumfangsrand, dem schwächeren Bereich und dem Sekundärumfangsrand miteinander verbunden sind, und
- der schwächere Bereich zwischen dem Hauptumfangsrand und dem Sekundärumfangsrand angeordnet ist.

12. Beuteleinheit nach Anspruch 11, wobei:
- der Hauptumfangsrand die Substanz umgibt und der Sekundärumfangsrand die Nachricht umgibt, und/oder wobei:
- zumindest eine Aussparung in den beiden miteinander verbundenen Filmen angrenzend an den schwächeren Bereich vorgesehen ist, und die Aussparung sich zwischen dem Hauptumfangsrand und dem Sekundärumfangsrand erstreckt, und/oder wobei:
- eine erste Aussparung (20A) und eine zweite Aussparung (20B) in den zwei miteinander verbundenen Filmen angrenzend an den schwächeren Bereich vorgesehen sind, die erste Aussparung und die zweite Aussparung sich zwischen dem Hauptumfangsrand und dem Sekundärumfangsrand erstrecken und der schwächere Bereich zwischen der ersten Aussparung und der zweiten Aussparung angeordnet ist.

13. Beuteleinheit nach Anspruch 12, wobei:
- der schwächere Bereich zwischen einem Hauptseitenteil (21A) des Hauptumfangsrands und einem Sekundärseitenteil (22A) des Sekundärumfangsrands angeordnet ist,
- der Hauptseitenteil und der Sekundärseitenteil sich in einer Seitenteilrichtung (23) erstrecken, und
- der schwächere Bereich sich in der Seitenteilrichtung über eine kleinere Strecke erstreckt als sowohl der Hauptseitenteil als auch der Sekundärseitenteil.

14. Verfahren zur Verwendung einer Beuteleinheit nach einem der vorangegangenen Ansprüche, umfassend:
- Halten des Hauptteils des Beutels in einer Hand und Halten des Sekundärteils des Beutels in einer anderen Hand, und
- manuelles Trennen des Sekundärteils von dem Hauptteil an dem schwächeren Bereich.

15. Verfahren nach Anspruch 14, wobei die Substanz in dem Hauptteil ein Waschmittel ist und das Verfahren umfasst:
- Einbringen von Wäsche in eine Waschmaschine,
- Analysieren der Nachricht des Sekundärteils,
- Einbringen des Hauptteils in die Waschmaschine, nachdem der Sekundärteil manuell von dem Hauptteil getrennt worden ist, und
- Entsorgen des Sekundärteils.

## Revendications

1. Unité ensachée (1) comprenant une dose d'une substance (2) qui est enveloppée par une partie principale (3) d'un sachet (4) constitué d'un matériau hydrosoluble (5), dans laquelle ;
- le sachet comprend une partie secondaire (6) constituée à partir du matériau hydrosoluble,
- la partie secondaire est attachée à la partie principale via une zone plus faible (9) du matériau hydrosoluble, laquelle zone plus faible est configurée pour permettre la séparation manuelle de la partie secondaire de la partie principale, et
- un message (7) est prévu sur la partie secondaire.

2. Unité ensachée selon la revendication 1, dans laquelle le message comprend un texte ou un symbole.

3. Unité ensachée selon la revendication 1 ou 2, dans laquelle le message est fourni par un colorant (11).

4. Unité ensachée selon l'une quelconque des revendications précédentes, dans laquelle le message est fourni par un relief (12).

5. Unité ensachée selon l'une quelconque des revendications précédentes, dans laquelle le sachet présente une résistance à la traction plus faible au niveau de la zone plus faible par rapport à la partie principale et à la partie secondaire.

6. Unité ensachée selon l'une quelconque des revendications précédentes, dans laquelle la partie secondaire s'étend à l'écart de la partie principale.

7. Unité ensachée selon l'une quelconque des revendications précédentes, dans laquelle la substance contenue dans la partie principale du sachet est une matière détergente, telle qu'un détergent pour le linge.

8. Unité ensachée selon l'une quelconque des revendications précédentes, dans laquelle le matériau hydrosoluble a été soumis à un traitement d'affaiblissement au niveau de la zone plus faible, et dans laquelle éventuellement la zone plus faible comprend une incision (10) ou plusieurs incisions (10) dans le matériau hydrosoluble.

9. Unité ensachée selon l'une quelconque des revendications précédentes, dans laquelle le sachet est uniquement formé par le matériau hydrosoluble.

10. Unité ensachée selon l'une quelconque des revendications précédentes, dans laquelle le sachet est formé par au moins deux films interconnectés (16A, 16B) du matériau hydrosoluble.

11. Unité ensachée selon la revendication 10, dans laquelle ;
- la partie principale comprend un rebord périphérique principal (17),
- la partie secondaire comprend un rebord périphérique secondaire (18),
- les au moins deux films sont reliés l'un à l'autre au niveau du rebord périphérique principal, de la zone plus faible et du rebord périphérique secondaire, et
- la zone plus faible est située entre le bord périphérique principal et le bord périphérique secondaire.

12. Unité ensachée selon la revendication 11, dans laquelle :
- le rebord périphérique principal entoure la substance et le rebord périphérique secondaire entoure le message, et/ou dans laquelle :
- au moins un évidement est prévu dans les deux films interconnectés adjacents à la zone plus faible, et l'évidement s'étend entre le bord périphérique principal et le bord périphérique secondaire, et/ou dans laquelle :
- un premier évidement (20A) et un second évidement (20B) sont prévus dans les deux films interconnectés adjacents à la zone plus faible, le premier évidement et le second évidement s'étendent entre le bord périphérique principal et le bord périphérique secondaire, et la zone plus faible est située entre le premier évidement et le second évidement.

13. Unité ensachée selon la revendication 12, dans laquelle ;
- la zone plus faible est située entre une partie latérale principale (21A) du rebord périphérique principal et une partie latérale secondaire (22A) du rebord périphérique secondaire,
- la partie latérale principale et la partie latérale secondaire s'étendent dans une direction de partie latérale (23), et
- la zone plus faible s'étend sur une plus petite distance dans la direction de la partie latérale que chacune de la partie latérale principale et de la partie latérale secondaire.

14. Procédé d'utilisation d'une unité ensachée selon l'une quelconque des revendications précédentes, comprenant ;
- la tenue de la partie principale du sachet dans une main et la tenue de la partie secondaire du sachet dans une autre main, et
- la séparation manuellement de la partie secondaire de la partie principale au niveau de la zone plus faible.

15. Procédé selon la revendication 14, dans lequel la substance dans la partie principale est un détergent pour le linge et le procédé comprend ;
- placer le linge dans une machine à laver,
- analyser le message de la partie secondaire,
- placer la partie principale dans la machine à laver après que la partie secondaire ait été séparée manuellement de la partie principale, et
- mettre au rebut la partie secondaire.
